(19) **Europäisches Patentamt / European Patent Office / Office européen des brevets**

(11) **EP 4 773 225 A1**

(12) **EUROPEAN PATENT APPLICATION**
published in accordance with Art. 153(4) EPC

(43) Date of publication:
08.07.2026 Bulletin 2026/28

(21) Application number: 24877574.4

(22) Date of filing: 11.10.2024

(51) International Patent Classification (IPC):
$H01M\ 4/36^{(2006.01)}$    $H01M\ 4/525^{(2010.01)}$
$H01M\ 4/505^{(2010.01)}$    $H01M\ 10/052^{(2010.01)}$
$C01G\ 53/00^{(2025.01)}$    $H01M\ 4/02^{(2006.01)}$

(52) Cooperative Patent Classification (CPC):
C01G 53/00; H01M 4/02; H01M 4/36; H01M 4/505;
H01M 4/525; H01M 10/052; Y02E 60/10

(86) International application number:
PCT/KR2024/015445

(87) International publication number:
WO 2025/080039 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.10.2023 KR 20230136137

(71) Applicant: LG Chem, Ltd.
Seoul 07336 (KR)

(72) Inventors:
• LEE, In Deok
Daejeon 34122 (KR)
• RHEE, Tae Young
Daejeon 34122 (KR)
• KIM, Jong Pil
Daejeon 34122 (KR)
• BYEON, Ji Yeon
Daejeon 34122 (KR)
• JUNG, Won Sig
Daejeon 34122 (KR)
• LEE, Kang Hyeon
Daejeon 34122 (KR)
• JEONG, Jong Seok
Daejeon 34122 (KR)
• HWANG, Hye Youn
Daejeon 34122 (KR)

(74) Representative: Hoffmann Eitle
Patent- und Rechtsanwälte PartmbB
Arabellastraße 30
81925 München (DE)

(54) **POSITIVE ELECTRODE ACTIVE MATERIAL AND METHOD FOR PREPARING SAME**

(57) The present invention relates to a lithium metal battery having improved lifespan and stability, comprising: a positive electrode; a lithium metal negative electrode; a separator interposed between the positive electrode and the lithium metal negative electrode; and a non-aqueous electrolyte including an organic solvent, a lithium salt, and a compound represented by Chemical Formula I described herein.

EP 4 773 225 A1

[FIG. 1]

Example 1                    Example 3

**Description**

**Technical Field**

CROSS-REFERENCE TO RELATED APPLICATION

This application claims the benefit of priority to Korean Patent Application No. 10-2023-0136137 filed on October 12, 2023, the disclosure of which is incorporated herein by reference in its entirety.

Technical Field

The present invention relates to a positive electrode active material in the form of a single particle and a method for manufacturing the same.

**Background Art**

Recently, as technology development and demand for mobile devices and electric vehicles increase, demand for secondary batteries as an energy source is rapidly increasing. Among the secondary batteries, a lithium secondary battery, which has high energy density and voltage, long cycle life and low self-discharge rate, has been commercialized and is widely used.

A lithium secondary battery is generally composed of a positive electrode, a negative electrode, a separator, and an electrolyte, wherein the positive electrode and the negative electrode include an active material capable of intercalating and deintercalating lithium ions.

As positive electrode active materials for lithium secondary batteries, lithium transition metal oxides such as lithium cobalt oxide such as $LiCoO_2$, lithium nickel oxide such as $LiNiO_2$, lithium manganese oxide such as $LiMnO_2$ or $LiMn_2O_4$, and lithium iron phosphate oxide such as $LiFePO_4$ have been developed, and recently, lithium composite transition metal oxides containing two or more transition metals such as $Li[Ni_aCosMn_c]O_2$, $Li[Ni_aCo_bAl_c]O_2$, and $Li[Ni_aCo_bMn_cAl_a]O_2$ have been developed and are widely used.

Meanwhile, the positive electrode active material used in the lithium secondary batteries generally has a form of a spherical secondary particle formed by agglomeration of hundreds of fine primary particles having submicron size. However, the positive electrode active materials in the form of a secondary particle have a problem in that cracks occur in the secondary particles during repeated charge/discharge, causing various side reactions and deteriorating battery characteristics.

In order to solve this problem, development of positive electrode active materials in the form of a single particle are actively being conducted, but when manufacturing the positive electrode active materials in the form of a single particle, calcination at a higher temperature is required than when manufacturing the positive electrode active materials in the form of a secondary particle, which causes a problem in that the ratio of a NiO reduction layer on the particle surface increases. Meanwhile, when the ratio of the NiO reduction layer on the surface of positive electrode active materials increases, problems such as increased resistance, decreased capacity, and decreased output of the battery occur, and thus, a surface treatment technology capable of controlling the NiO reduction layer is required.

**Disclosure**

**Technical Problem**

An object of the present invention is to provide a positive electrode active material capable of implementing a battery having improved discharge capacity, lifespan, resistance, output, gas performance and, etc. by controlling the NiO reduction layer, and a method for manufacturing the same.

**Technical Solution**

In order to achieve the above object, the present invention provides a positive electrode active material and a method for manufacturing the same.

(1) The present invention provides a positive electrode active material in the form of a single particle, including: a lithium transition metal oxide in the form of a single particle; and a first coating portion in the form of a film and a second coating portion in the form of an island, which are formed on the lithium transition metal oxide in the form of a single particle, wherein the first coating portion and the second coating portion each independently include a cobalt compound including Co, and an oxide including an M element (wherein M is at least one selected from Zr, Al, B, Ti, Mg, Cr, Cu, V, and W), wherein the content of Co included in the first coating portion is higher than the content of Co included in the second coating portion, and the content of M element included in the second coating portion is higher than the content of M element included in the first coating portion.

(2) The present invention provides the positive electrode active material in the form of a single particle according to (1) above, wherein the molar ratio ($Co_1:M_1$) of Co and M element included in the first coating portion is 1:0.01 to 0.99.

(3) The present invention provides the positive electrode active material in the form of a single particle according to (1) or (2) above, wherein the molar ratio ($Co_2:M_2$) of Co and M element included in the second coating portion is 0.01 to 0.99:1.

(4) The present invention provides the positive electrode active material in the form of a single particle according to any one of (1) to (3) above, wherein the molar ratio ($M_1:M_2$) of M element included in the first coating portion and M element included in the second coating portion is 0.001 to 0.99:1.

(5) The present invention provides the positive electrode active material in the form of a single particle according to any one of (1) to (4) above, wherein the Ni content included in the second coating portion is 30 wt% or less based on the total weight of the second coating portion.

(6) The present invention provides the positive electrode active material in the form of a single particle according to any one of (1) to (5) above, wherein the positive electrode active material in the form of a single particle has an average particle diameter ($D_{50}$) of 0.1 μm to 10 μm.

(7) The present invention provides the positive electrode active material in the form of a single particle according to any one of (1) to (6) above, wherein the positive electrode active material in the form of a single particle is a form in which 50 or less primary particles composed of 10 or less single crystal grains are agglomerated.

(8) The present invention provides the positive electrode active material in the form of a single particle according to any one of (1) to (7) above, wherein the lithium transition metal oxide in the form of a single particle is a lithium composite transition metal oxide containing nickel (Ni), cobalt (Co), and manganese (Mn).

(9) The present invention provides the positive electrode active material in the form of a single particle according to any one of (1) to (8) above, wherein the lithium transition metal oxide in the form of a single particle has a composition represented by Chemical Formula 1 below:

[Chemical Formula 1] $\quad$ $Li_aNi_bCo_cMn_dM^1_eO_2$

wherein:

$M^1$ is at least one selected from Al, Zr, B, W, Mo, Cr, Nb, Mg, Hf, Ta, La, Ti, Sr, Ba, Ce, Sn, Y, Zn, F, P, and S, and

$$0.9 \leq a \leq 1.1,$$

$0.8 \leq b < 1.0$, $0 < c < 0.2$, $0 < d < 0.2$, $0 \leq e \leq 0.1$, and $b+c+d+e=1$.

(10) The present invention provides a method for manufacturing a positive electrode active material according to any one of (1) to (9) above, the method including the steps of: (A) preparing a mixture by mixing a lithium transition metal oxide in the form of a single particle, a Co-containing raw material, and an M element-containing raw material (wherein, M is at least one selected from Zr, Al, B, Ti, Mg, Cr, Cu, V, and W); and (B) first heat-treating the mixture at a temperature of more than 600°C and 800°C or lower, and then second heat-treating the mixture at a temperature of 400°C to 600°C.

(11) The present invention provides the method for manufacturing a positive electrode active material according to (10) above, wherein the Co-containing raw material is at least one selected from the group consisting of $Co(OH)_2$, $Co_2O_3$, $CoCl_2$, $Co(NO_3)_2$, $Co(CH_3CO_2)_2$, and hydrates thereof.

(12) The present invention provides the method for manufacturing a positive electrode active material according to (10) or (11) above, wherein in the step (A), the lithium transition metal oxide in the form of a single particle and the Co-containing raw material are mixed at a molar ratio of 1:0.01 to 0.05.

(13) The present invention provides the method for manufacturing a positive electrode active material according to any one of (10) to (12) above, wherein in the step (A), the M element-containing raw material is mixed in an amount of 500 ppm to 5000 ppm based on the total weight of the lithium transition metal oxide in the form of a single particle.

(14) The present invention provides the method for manufacturing a positive electrode active material according to any one of (10) to (13) above, wherein the mixing in the step (A) is dry mixing.

(15) The present invention provides the method for manufacturing a positive electrode active material according to any one of (10) to (14) above, wherein the first heat treatment in the step (B) is performed under an oxygen atmosphere.

(16) The present invention provides the method for manufacturing a positive electrode active material according to any one of (10) to (15) above, wherein the second heat treatment in the step (B) is performed under an oxygen atmosphere.

**Advantageous Effects**

The positive electrode active material of the present invention is characterized by including: a lithium transition metal oxide in the form of a single particle; and a first coating portion in the form of a film and a second coating portion in the form of an island, which are formed on the lithium transition metal oxide in the form of a single particle, wherein the first coating portion and the second coating portion each independently include a cobalt compound including Co, and an oxide including an M element (wherein M is at least one selected from Zr, Al, B, Ti, Mg, Cr, Cu, V, and W), wherein the content of Co included in the first coating portion is higher than the content of Co included in the second coating portion, and the content of M element included in the second coating portion is higher than the content of M element included in the first coating portion, whereby the NiO reduction layer can be controlled to secure the discharge capacity of the lithium secondary battery and to improve the lifespan, resistance, output, gas performance, etc.

In addition, according to the method for manufacturing the positive electrode active material of the present invention, the positive electrode active material described above can be effectively manufactured.

**Description of Drawings**

FIG. 1 is a STEM-HR image of the positive electrode active materials of Example 1 and Comparative Example 3.

FIG. 2 is a TEM-EDS Mapping image of the positive electrode active material of Example 1.

FIG. 3 is a TEM-EDS Mapping image of the positive electrode active material of Example 2.

FIG. 4 is a SEM image of the positive electrode active material of Example 1 (left) and an image in which particles present on the SEM image are expressed in different colors for each single crystal grain (right).

**Best Modes of the Invention**

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as 'comprise', 'include', and "have" as used herein are intended to designate the presence of implemented features, numbers, steps, components, or combinations thereof, but not to preclude a possibility of existence or addition of one or more other features, numbers, steps, components, or combinations thereof.

In this specification, the term 'on~' is meant to include not only a case where a component is formed directly on another component, but also a case where a third component is interposed between these components.

In this specification, a 'positive electrode active material in the form of a single particle' is a concept that is in contrast to a positive electrode active material in the form of a spherical secondary particle formed by agglomeration of tens to hundreds of primary particles manufactured by a conventional method, and refers to a positive electrode active material composed of 50 or less, preferably 10 or less primary particles. Specifically, the positive electrode active material in the form of a single particle in the present invention may be a single particle composed of one primary particle, or may be in the form of a secondary particle in which 2 to 50, 2 to 40, 2 to 30, 2 to 20, 2 to 10, or 2 to 5 primary particles are agglomerated.

A 'primary particle' refers to a minimum particle unit recognized when observing a positive electrode active material through a scanning electron microscope, and a 'secondary particle' refers to a secondary structure formed by agglomeration of a plurality of primary particles.

In this specification, the average particle diameter ($D_{50}$) refers to a particle size based on 50% of the volume cumulative particle size distribution of the positive electrode active material or lithium transition metal oxide powder. The average particle diameter ($D_{50}$) can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

In this specification, the average particle diameter ($D_{EBSD}$) of a single crystal grain means a particle size based on 50% of the volume cumulative particle size distribution of a single crystal grain obtained through EBSD analysis using SEM. The EBSD analysis may be performed by obtaining an image with SEM-EBSD equipment (e.g., FEI Quanta200-EDAX, Velocity super OIM 8) and analyzing it with image analysis software (EDAX OIM Analysis).

Hereinafter, the present invention will be described in detail.

**Positive Electrode Active Material**

The present invention provides a positive electrode active material in the form of a single particle, including: a lithium transition metal oxide in the form of a single particle; and a first coating portion in the form of a film and a second coating portion in the form of an island, which are formed on the lithium transition metal oxide in the form of a single particle, wherein the first coating portion and the second coating portion each independently include a cobalt compound including Co, and an oxide including an M element (hereinafter, metal oxide) (wherein M is at least one selected from Zr, Al, B, Ti, Mg, Cr, Cu, V, and W), wherein the content of Co included in the first coating portion is higher than the content of Co included in the second coating portion, and the content of M element included in the second coating portion is higher than the content of M element included in the first coating portion.

The present inventors have found that when a positive electrode active material is in the form of a single particle and includes a first coating portion in the form of a film and a second coating portion in the form of an island, wherein the first coating portion and the second coating portion each independently include a cobalt compound including Co, and an oxide including an M element (hereinafter, metal oxide) (wherein M is at least one selected from Zr, Al, B, Ti, Mg, Cr, Cu, V, and W), wherein the content of Co included in the first coating portion is higher than the content of Co included in the second coating portion, and the content of M element included in the second coating portion is higher than the content of M element included in the first coating portion, the first coating portion acts as a buffer layer that suppresses Ni diffusion toward the positive electrode active material surface and the coating portion due to simultaneous surface/interface treatment with the cobalt compound and the metal oxide, and the NiO reduction layer can be controlled to suppress surface side reactions between the positive electrode active material and the electrolyte, and as a result, the stability of the battery can be secured, thereby completing the present invention.

Meanwhile, in the case of a positive electrode active material in the form of a single particle, if a washing process is applied to control residual lithium as in the case of a secondary particle form, the resistance increases significantly, and therefore, a solution different from that of applying the washing process is required. In this regard, the positive electrode active material of the present invention can control residual lithium with the first coating portion in the form of a film that is coated up to the grain boundary through the composite coating of the cobalt compound and the metal oxide, and can also improve the initial coulombic efficiency, output, and lifespan of the battery with the second coating portion.

In the present invention, the film form is a coating form that surrounds a particle like a capsule, and refers to a form in which a coating material is diffused to a certain extent in one particle to surround it.

According to the present invention, the positive electrode active material in the form of a single particle may have an average particle diameter ($D_{50}$) of 0.1 $\mu$m to 10 $\mu$m. Specifically, the average particle diameter ($D_{50}$) of the positive electrode active material in the form of a single particle may be 0.1 $\mu$m or more, 1.0 $\mu$m or more, or 2.0 $\mu$m or more, and 5.0 $\mu$m or less, 6.0 $\mu$m or less, 7.0 $\mu$m or less, 8.0 $\mu$m or less, 9.0 $\mu$m or less, or 10.0 $\mu$m or less. In this case, the density of the electrode including the positive electrode active material in the form of a single particle can be increased, thereby further improving the performance of the battery.

According to the present invention, the positive electrode active material in the form of a single particle may be a form in which 50 or less, specifically 30 or less, 20 or less, 10 or less, or 5 or less primary particles composed of 10 or less single crystal grains are agglomerated. In this case, the capacity and resistance performance of the battery can be improved, and cracks occurring in the particles during repeated charging and discharging can be reduced. The single crystal grain may have an average particle diameter ($D_{EBSD}$) of 0.1 $\mu$m to 10 $\mu$m. Specifically, the average particle diameter ($D_{ESSD}$) of the single crystal grain may be 0.1 $\mu$m or more, 1.0 $\mu$m or more, or 2.0 $\mu$m or more, and 5.0 $\mu$m or less, 6.0 $\mu$m or less, 7.0 $\mu$m or less, 8.0 $\mu$m or less, 9.0 $\mu$m or less, or 10.0 $\mu$m or less.

According to the present invention, the lithium transition metal oxide in the form of a single particle may be a lithium composite transition metal oxide containing nickel (Ni), cobalt (Co), and manganese (Mn). In this case, the lithium transition metal oxide in the form of a single particle may contain nickel (Ni) in an amount of 80 mol% or more, or 85 mol% or more, of the total metals excluding lithium.

According to the present invention, the lithium transition metal oxide in the form of a single particle may specifically have a composition represented by Chemical Formula 1 below:

[Chemical Formula 1] $\quad\quad Li_aNi_bCo_cMn_dM^1{}_eO_2$

wherein:

$M^1$ is at least one selected from Al, Zr, B, W, Mo, Cr, Nb, Mg, Hf, Ta, La, Ti, Sr, Ba, Ce, Sn, Y, Zn, F, P, and S, and

$$0.9 \leq a \leq 1.1,$$

$0.8 \leq b < 1.0$, $0 < c < 0.2$, $0 < d < 0.2$, $0 \leq e \leq 0.1$, and $b+c+d+e=1$.

The b refers to the atomic fraction of nickel among the metal elements excluding lithium in the lithium transition metal oxide, and may be 0.80 or more, 0.81 or more, 0.82 or more, 0.83 or more, 0.84 or more, or 0.85 or more, and may be 0.95 or less, 0.96 or less, 0.97 or less, 0.98 or less, 0.99 or less, or less than 1.0.

The c refers to the atomic fraction of cobalt among the metal elements excluding lithium in the lithium transition metal oxide, and may be greater than 0, or 0.01 or more, and may be 0.10 or less, 0.11 or less, 0.12 or less, 0.13 or less, 0.14 or less, 0.15 or less, 0.16 or less, 0.17 or less, 0.18 or less, 0.19 or less, or 0.20 or less.

The d refers to the atomic fraction of manganese among the metal elements excluding lithium in the lithium transition metal oxide, and may be greater than 0, or 0.01 or more, and may be 0.10 or less, 0.11 or less, 0.12 or less, 0.13 or less, 0.14 or less, 0.15 or less, 0.16 or less, 0.17 or less, 0.18 or less, 0.19 or less, or 0.20 or less.

The e refers to the elemental fraction of the $M^1$ element among the metal elements excluding lithium in the lithium transition metal oxide, and may be 0 or more, and may be 0.02 or less, 0.03 or less, 0.04 or less, 0.05 or less, 0.06 or less, 0.07 or less, 0.08 or less, 0.09 or less, or 0.10 or less.

In the present invention, the first coating portion and the second coating portion are formed when a lithium transition metal oxide in the form of a single particle and a Co-containing raw material and an M element-containing raw material are mixed and then heat-treated. The Co-containing raw material and the M element-containing raw material have different heat treatment temperatures required for cobalt or M element to diffuse into the positive electrode active material. At the heat treatment temperature of the present invention, the Co-containing raw material can not only form a $LiCoO_2$ phase, but also the $LiCoO_2$ phase can diffuse into the positive electrode active material. The diffusion of the $LiCoO_2$ phase into the positive electrode active material can be confirmed by a decrease in the intensity of the phase through in-situ thermal XRD measurement. Meanwhile, at the heat treatment temperature of the present invention, the M element-containing raw material can form a metal oxide (including lithium metal oxide), but the metal oxide is difficult to diffuse into the positive electrode active material due to its stable structure compared to the $LiCoO_2$ phase. Therefore, the first coating portion becomes Co-rich, and the second coating portion contains $LiCoO_2$ in the form of an island and most of the metal oxide, which causes a difference in the content of Co and M element in the two coating portions. In conclusion, as described above, the positive electrode active material of the present invention can include the first coating portion in the form of a Co-rich film formed by cobalt diffusion into the positive electrode active material, and the second coating portion in the form of an island mainly composed of metal oxide.

Meanwhile, the cobalt compound may be cobalt oxide, lithium cobalt oxide, Li-Co-O solid solution and/or Li$[Ni_{x1}Co_{y1}Mn_{z1}]O_2$($0.8 \leq x1 < 1.0$, $0 < y1 \leq 0.2$, $0 \leq z1 \leq 0.1$). In addition, the oxide including the M element may be $M_{x2}O_{y2}$ ($1 \leq x2 \leq 2$, $2 \leq y2 \leq 5$), $Li_{x3}M_{y3}O_{z3}$($1 \leq x3 \leq 2$, $1 \leq y3 \leq 2$, $2 \leq z3 \leq 6$), and/or Li-M-O solid solution.

According to the present invention, the coating portion may be a region of 5 nm to 100 nm in a direction from the surface of the positive electrode active material to the center. Specifically, the coating portion may be a region of up to 5 nm, 10 nm, 20 nm, 30 nm, 40 nm, 50 nm, 60 nm, 70 nm, 80 nm, 90 nm, and 100 nm in a direction from the surface of the positive electrode active material to the center.

In this specification, the coating portion is a region from the surface of the positive electrode active material to a point where the Co content measured through a TEM-EDX experiment exceeds 1.1 times the average Co content (mol%) of the entire positive electrode active material. In the TEM-EDX experiment, a thin film sample having a thickness of 100 nm to 200 nm is prepared from the positive electrode active material powder using the FEI Helios G4 UX FIB equipment, and then the FEI Titan G2 80-200 ChemiSTEM equipment and the EDX (in-column super-X Energy Dispersive X-ray spectroscopy) unit (ChemiSTEM technology) are used to measure the X-ray spectrum of elements at each position of the sample, and the intensities can be compared to obtain the molar ratio (mol%) value for each element.

In the present invention, the island-shaped second coating portion is formed discontinuously on the surface of the positive electrode active material. That is, the island-shaped second coating portion does not entirely cover the surface of the positive electrode active material, but is partially dispersed and distributed.

According to the present invention, the molar ratio ($Co_1:M_1$) of Co and M element included in the first coating portion is 1:0.01 to 0.99. Specifically, the molar ratio of Co and M element included in the first coating portion ($Co_1:M_1$) may be 1:0.01 to 0.99, 1:0.01 to 0.90, 1:0.01 to 0.80, 1:0.01 to 0.70, 1:0.01 to 0.60, 1:0.01 to 0.50, 1:0.01 to 0.40, 1:0.01 to 0.30, 1:0.01 to 0.20, 1:0.01 to 0.15, 1:0.05 to 0.15 or 1:0.05 to 0.13. In this case, a cobalt compound such as Li$[Ni_{x1}Co_{y1}Mn_{z1}]O_2$ having a high Co composition exists in the form of a film on the surface of the positive electrode active material, whereby the first coating portion can serve as a physical barrier. For reference, in the case of a nickel-rich NCM-based positive electrode active material that does not include a coating portion according to the present invention, the content of $Ni^{2+}$ increases to maintain the oxidation number between transition metals, resulting in an unstable surface structure. When charging is performed in this situation, an electrochemically inactive NiO reduction layer is placed on the surface of the positive electrode active material due to excessive lithium release, and further, the resistance and life characteristics deteriorate due to excessive side reactions with the electrolyte on the surface. However, the positive electrode active material according to the present invention can maintain the oxidation number of Ni more stably due to the first coating portion in the form of a film, thereby inhibiting the NiO reduction layer. In addition, the first coating portion can also serve as a physical barrier to prevent excessive expansion of the positive electrode active material during continuous charging and discharging, thereby allowing the positive electrode active material to maintain a stable structure even during continuous charging and discharging.

According to the present invention, the molar ratio ($Co_2:M_2$) of Co and M element included in the second coating portion is 0.01 to 0.99:1. Specifically, the molar ratio ($Co_2:M_2$) of Co and M element included in the second coating portion may be 0.01 to 0.99:1, 0.01 to 0.90:1, 0.01 to 0.80:1, 0.01 to 0.70:1, 0.01 to 0.60:1, 0.01 to 0.50:1, 0.01 to 0.40:1, 0.01 to 0.30:1, 0.01 to 0.20:1, 0.01 to 0.10:1, 0.01 to 0.05:1, or 0.01 to 0.04:1. Since the M element exists in a stable oxidation state, it has excellent chemical stability under electrochemical voltage conditions. The M element has insulating properties for ions and electrons, and therefore, if it is heat-treated at a temperature higher than the heat treatment temperature of the present invention and diffuses greatly into the positive electrode active material, it may have a negative effect on the battery performance. However, since the second coating portion mainly includes an oxide including the M element that exists in a stable oxidation state through an appropriate heat treatment temperature, there is an effect of improving the initial Coulombic efficiency, output, etc. of the battery.

According to the present invention, the molar ratio ($M_1:M_2$) of the M element included in the first coating portion and the M element included in the second coating portion may be 0.01 to 0.99:1. Specifically, the molar ratio ($M_1:M_2$) of the M element included in the first coating portion and the M element included in the second coating portion may be 0.001 to 0.99:1, 0.001 to 0.90:1, 0.001 to 0.80:1, 0.001 to 0.70:1, 0.001 to 0.60:1, 0.001 to 0.50:1, 0.001 to 0.40:1, 0.001 to 0.30:1, 0.001 to 0.20:1, 0.001 to 0.10:1, 0.001 to 0.09:1, 0.001 to 0.08:1, 0.001 to 0.07:1, 0.001 to 0.06:1, 0.001 to 0.05:1, 0.001 to 0.04:1, 0.001 to 0.03:1, 0.001 to 0.02:1, 0.001 to 0.01:1, 0.001 to 0.009:1, or 0.001 to 0.008:1, or 0.002 to 0.008:1. When the molar ratio of the M element included in the first coating portion and the M element included in the second coating portion is within the above range, the effect due to the composite coating of the cobalt compound and the metal oxide can be further maximized.

According to the present invention, the Ni content included in the second coating portion may be 30 wt% or less, specifically 20 wt% or less, 15 wt% or less, 10 wt% or less, or 5 wt% or less, based on the total weight of the second coating portion. The positive electrode active material according to the present invention, although being a Ni-rich positive electrode active material, can reduce residual lithium due to simultaneous surface/interface treatment with the cobalt compound and the metal oxide, and can prevent nickel ($Ni^{3+}$) in an unstable state having a high oxidation number from diffusing toward the surface of the positive electrode active material, so that the Ni content included in the second coating portion may be low.

## Method of Manufacturing Positive Electrode Active Material

The present invention provides a method for manufacturing the above-described positive electrode active material according to the present invention, the method including the steps of: (A) preparing a mixture by mixing a lithium transition metal oxide in the form of a single particle, a Co-containing raw material, and an M element-containing raw material (wherein, M is at least one selected from Zr, Al, B, Ti, Mg, Cr, Cu, V, and W); and (B) first heat-treating the mixture at a temperature of 500°C to 800°C, and then second heat-treating the mixture at a temperature of 400°C to 600°C.

The above-described positive electrode active material according to the present invention may be manufactured by appropriately controlling the composition of the lithium transition metal oxide, shape, type of raw material, mixing ratio, two heat-treatment steps, heat-treatment temperature, heat-treatment atmosphere, etc.

Hereinafter, the method for manufacturing the positive electrode active material will be described in more detail.

Step (A)

The step (A) is a step of preparing a mixture by mixing a lithium transition metal oxide in the form of a single particle, a Co-containing raw material, and an M element-containing raw material (wherein, M is at least one selected from Zr, Al, B, Ti, Mg, Cr, Cu, V, and W).

According to the present invention, the lithium transition metal oxide in the form of a single particle in the step (A) may be an agglomerate of 50 or less lithium transition metal oxide particles having an average particle diameter ($D_{50}$) of 0.1 $\mu$m to 10 $\mu$m. In this case, the lithium transition metal oxide particles having an average particle diameter ($D_{50}$) of 0.1 $\mu$m to 10 $\mu$m may be composed of 10 or less single crystal grains.

According to the present invention, the lithium transition metal oxide in the form of a single particle may be a lithium composite transition metal oxide containing nickel (Ni), cobalt (Co), and manganese (Mn). In this case, the lithium transition metal oxide in the form of a single particle may contain nickel (Ni) in an amount of 80 mol% or more, or 85 mol% or more, of the total metals excluding lithium.

According to the present invention, the lithium transition metal oxide in the form of a single particle may specifically have a composition represented by Chemical Formula 1 below:

[Chemical Formula 1]    $Li_aNi_bCo_cMn_dM^1_eO_2$

wherein:

$M^1$ is at least one selected from Al, Zr, B, W, Mo, Cr, Nb, Mg, Hf, Ta, La, Ti, Sr, Ba, Ce, Sn, Y, Zn, F, P, and S, and

$$0.9 \leq a \leq 1.1,$$

$0.8 \leq b < 1.0$, $0 < c < 0.2$, $0 < d < 0.2$, $0 \leq e \leq 0.1$, and $b+c+d+e=1$.

The b refers to the atomic fraction of nickel among the metal elements excluding lithium in the lithium transition metal oxide, and may be 0.8 or more, or 0.85 or more, and 0.95 or less, or 0.98 or less.

The c refers to the atomic fraction of cobalt among the metal elements excluding lithium in the lithium transition metal oxide, and may be 0.01 or more, and 0.1 or less, or 0.2 or less.

The d refers to the atomic fraction of manganese among the metal elements excluding lithium in the lithium transition metal oxide, and may be 0.01 or more, and 0.1 or less, or 0.2 or less.

The e refers to the elemental fraction of the $M^1$ element among the metal elements excluding lithium in the lithium transition metal oxide, and may be 0 or more, and 0.02 or less, 0.05 or less, or 0.1 or less.

According to the present invention, the lithium transition metal oxide in the form of a single particle in the step (A) may have a cation mixing of 5% or less. In this case, the amount of impurities present in the resulting positive electrode active material is small, and thus, the performance of the battery can be improved. The cation mixing value is a value measuring the ratio (%) of sites of lithium and other metal ions being substituted with each other in the structure.

According to the present invention, the lithium transition metal oxide in the form of a single particle in the step (A) may contain lithium byproducts in an amount of 20,000 ppm or less. In this case, the amount of impurities present in the resulting positive electrode active material is small, so that the agglomeration phenomenon of the slurry (composition for forming the positive electrode active material) can be reduced when manufacturing the positive electrode, thereby improving the process.

The lithium transition metal oxide in the form of a single particle in the step (A) may be prepared by mixing a positive electrode active material precursor (e.g., a transition metal hydroxide, a transition metal oxyhydroxide, etc.), a lithium raw material (e.g., lithium carbonate ($Li_2CO_3$), lithium hydroxide (LiOH), $LiNO_3$, $CH_3COOLi$, $Li_2(COO)_2$, etc.), and optionally a doping element (e.g., Y, Zr, Al) raw material, etc. and calcining the mixture at a high temperature. Here, the calcination may be a single-stage calcination or a multi-stage calcination. Meanwhile, if the calcination is a two-stage calcination, the lithium raw material may be mixed all together before the first calcination, or may be mixed separately before the first calcination and before the second calcination. Meanwhile, the calcination may be performed at a temperature of 700°C to 900°C under an oxygen atmosphere.

According to the present invention, the Co-containing raw material is at least one selected from the group consisting of $Co(OH)_2$, $Co_2O_3$, $CoCl_2$, $Co(NO_3)_2$, $Co(CH_3CO_2)_2$, and hydrates thereof. In this case, there is an advantage in reducing residual lithium on the surface of the positive electrode active material.

According to the present invention, in the step (A), the lithium transition metal oxide in the form of a single particle and the Co-containing raw material may be mixed at a molar ratio of 1:0.01 to 0.05, specifically 1:0.01 to 0.04, and more specifically 1:0.01 to 1:0.03.

According to the present invention, the M element-containing raw material may be at least one selected from the group consisting of M-containing nitrates, phosphates, sulfates, halides, oxyhalides, acetates, oxides, hydroxides, hydrides, sulfides, carbides, nitrides, and hydrates thereof. In this case, the electrochemical stability is excellent due to the stable oxidation number maintenance of the M element ions forming the coating portion. Due to these characteristics, there is an effect of improving battery performance such as the initial coulombic efficiency, output, lifespan, etc.

For example, the M element-containing raw material may be $ZrO_2$, $Zr(NO_3)_4$, $Zr(HPO_4)_2$, ZrC, $ZrOCl_2$, $Zr(OH)_4$, etc. when M is Zr, and may be $Al(OH)_3$, $Al_2O_3$, $AlCl_3$, $Al_2(SO_4)_3$, $Al(NO_3)_3$, etc. when M is Al. In addition, when M is B, it may be $H_3BO_3$, $BF_3$, BN, $B_4C$, $B_2H_6$, $B_2O_3$, etc.

According to the present invention, in the step (A), the M element-containing raw material is mixed in an amount of 500 ppm to 5000 ppm based on the total weight of the lithium transition metal oxide in the form of a single particle. Specifically, the content of the M element-containing raw material in the step (A) may be 500 ppm or more, 600 ppm or more, 700 ppm or more, 800 ppm or more, 900 ppm or more, or 1000 ppm or more, and 1500 ppm or less, 2000 ppm or less, 2500 ppm or less, 3000 ppm or less, 3500 ppm or less, 4000 ppm or less, 4500 ppm or less, or 5000 ppm or less, based on the total weight of the lithium transition metal oxide in the form of a single particle. The M element may affect the movement of lithium ions when used in excess due to its insulating properties for ions and electrons, but if used in an appropriate amount, it may form a non-reactive oxide material (an oxide containing the M element of the present invention) to improve the lifespan characteristics of the battery.

According to the present invention, the mixing in the step (A) may be dry mixing. That is, the lithium transition metal oxide in the form of a single particle may be simply mixed with a powder-type cobalt raw material without a solvent. In this case, the process can be simplified, which not only reduces costs but also produces a positive electrode active material with uniform quality.

**Step (B)**

The step (B) is a step of first heat-treating the mixture at a temperature of more than 600°C and less than 800°C, and then second heat-treating at a temperature of 400°C to 600°C.

Thereby, a $LiCoO_2$ rock-salt phase is formed at a temperature of about 400°C to 500°C, and $LiCoO_2$ gradually decreases as Co diffuses into the positive electrode material at about 600°C to 700°C. In particular, when the first heat-treatment temperature is more than 600°C and less than 800°C, the NiO reduction layer can be reduced through the Co-rich first coating portion that exhibits optimal electrochemical performance. In addition, when the second heat-treatment temperature is 400°C to 600°C, the reaction of the coating raw materials is not accelerated, and the surface instability caused by performing at high temperature can be recovered.

Meanwhile, when the heat treatment is performed in only one step, there is a problem that surface defects exist due to high-temperature calcination. In addition, when the first heat-treatment temperature is 600°C or lower, there is a problem that the reaction does not occur properly because it is lower than the reaction temperature at which the positive electrode active material and the coating raw material can react. When it exceeds 800°C, a coating portion is formed on the surface, and rather than expressing the effect, the coating raw material excessively diffuses into the positive electrode active material and becomes a doping form, thereby reducing the coating effect such as capacity increase and residual lithium reduction.

According to the present invention, the first and second heat treatments in the step (B) may be performed independently under an oxygen atmosphere to form an oxidizing atmosphere. The first and second heat treatments in the step (B) may be performed for 1 to 6 hours to form an appropriate coating layer.

**Positive Electrode**

In addition, the present invention may provide a positive electrode including the above positive electrode active material.

Specifically, the positive electrode includes a positive electrode current collector, and a positive electrode active material layer positioned on at least one surface of the positive electrode current collector and comprising the positive electrode active material.

The positive electrode current collector is not particularly limited as long as it has conductivity without causing a chemical change in the battery, and may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 $\mu$m to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer may include, along with the positive electrode active material, a conductive material and a binder.

In this case, the positive electrode active material may be included in an amount of 80% to 99% by weight, more specifically 85% to 98% by weight, based on the total weight of the positive electrode active material layer. When included in the above-mentioned content range, excellent capacity characteristics can be exhibited.

The above conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 1% by weight to 30% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, or various copolymers thereof, and any one or a mixture of two or more thereof may be used. The binder may be included in an amount of 1% by weight to 30% by weight based on the total weight of the positive electrode active material layer.

The positive electrode may be manufactured according to a conventional positive electrode manufacturing method except for the use of the positive electrode active material described above. Specifically, it may be manufactured by applying a composition for forming a positive electrode active material layer onto a positive electrode current collector, and then drying and rolling, wherein the composition is prepared by dissolving or dispersing the above-mentioned positive electrode active material and optionally, a binder and a conductive material in a solvent. The types and contents of the positive electrode active material, binder, and conductive material are as described above. Alternatively, the positive electrode may be manufactured by casting the composition for forming the positive electrode active material layer on a separate support, peeling a film from the support, and then laminating the film on a positive electrode current collector.

The solvent may be any solvent commonly used in the art, for example, dimethyl sulfoxide (DMSO), isopropyl alcohol, N-methyl pyrrolidone (NMP), acetone, water, or the like, and any one or a mixture of two or more thereof may be used. The solvent may be used in an amount sufficient to dissolve or disperse the positive electrode active material, conductive material, and binder in consideration of the application thickness of the slurry and the manufacturing yield, and to allow the slurry to have a viscosity capable of exhibiting excellent thickness uniformity when applied for the subsequent positive electrode production.

## Lithium Secondary Battery

In addition, the present invention may provide an electrochemical device including the positive electrode. The electrochemical device may be specifically a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ ($0<\beta<2$), $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and may usually be added in an amount of 0.1% to 10% by weight based on the total weight of the negative electrode active material layer. Examples of the binder include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode active material layer. Alternatively, the negative electrode active material layer may be manufactured by casting the composition for forming a negative electrode active material layer on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

The lithium salt may be any compound without particular limitation as long as it can provide lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte

# EP 4 773 225 A1

components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight, based on the total weight of the electrolyte.

As described above, since the lithium secondary battery including the positive electrode active material according to the present invention stably exhibits excellent discharge capacity, output characteristics, and lifespan characteristics, it is useful in the field of portable devices such as mobile phones, laptop computers, digital cameras, and electric vehicles such as hybrid electric vehicle (HEV).

Accordingly, in accordance with another embodiment of the present invention, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

## Modes for Carrying Out the Invention

Hereinafter, examples of the present invention will be described in detail so that those skilled in the art can easily implement the present invention. However, the present invention may be embodied in a variety of forms and is not limited to the examples described herein.

## Preparation Example

**Preparation Example 1:** Preparation of a lithium transition metal oxide in the form of a single particle having a composition represented by $LiNi_{0.945}Co_{0.02}Mn_{0.03}Al_{0.005}O_2$.

A positive electrode active material precursor having a composition represented by $Ni_{0.95}Co_{0.02}Mn_{0.03}(OH)_2$ and an average particle diameter ($D_{50}$) of 3.5 $\mu$m, $Al(OH)_3$, and LiOH were mixed at a molar ratio of 1:0.005:1.05, and firstly calcined at a temperature of 840°C under an oxygen atmosphere for 12 hours to prepare a pre-calcined product, which was secondarily calcined at a temperature of 770°C under an oxygen atmosphere for 12 hours to prepare a lithium transition metal oxide in the form of a single particle having a composition represented by $LiNi_{0.945}Co_{0.02}Mn_{0.03}Al_{0.005}O_2$.

## Examples and Comparative Examples

### Example 1

The lithium transition metal oxide in the form of a single particle prepared in Preparation Example 1 and powder-type $Co(OH)_2$ (Huayou Cobalt Co., Ltd.) were dry-mixed at a molar ratio of 1:0.02, and 1000 ppm of $ZrO_2$ was further mixed (dry) based on the total weight of the lithium transition metal oxide to prepare a mixture. The mixture was first heat-treated at a temperature of 700°C under an oxygen atmosphere for 3 hours, and then secondarily heat-treated at a temperature of 500°C under an oxygen atmosphere for 3 hours to prepare a positive electrode active material in the form of a single particle.

### Example 2

The lithium transition metal oxide in the form of a single particle prepared in Preparation Example 1 and powder-type $Co(OH)_2$ (Huayou Cobalt Co., Ltd.) were dry-mixed at a molar ratio of 1:0.02, and 1000 ppm of $Al(OH)_3$ was further mixed (dry) based on the total weight of the lithium transition metal oxide to prepare a mixture. The mixture was first heat-treated at a temperature of 700°C under an oxygen atmosphere for 3 hours, and then secondarily heat-treated at a temperature of 500°C under an oxygen atmosphere for 3 hours to prepare a positive electrode active material in the form of a single particle.

**Comparative Example 1**

The lithium transition metal oxide in the form of a single particle having a composition represented by $LiNi_{0.945}Co_{0.02}Mn_{0.03}Al_{0.005}O_2$ prepared in Preparation Example 1 was used as the positive electrode active material of Comparative Example 1.

**Comparative Example 2**

The lithium transition metal oxide in the form of a single particle prepared in Preparation Example 1 and powder-type $Co(OH)_2$ (Huayou Cobalt Co., Ltd.) were dry-mixed at a molar ratio of 1:0.02 to prepare a mixture. The mixture was first heat-treated at a temperature of 700°C under an oxygen atmosphere for 3 hours, and then secondarily heat-treated at a temperature of 500°C under an oxygen atmosphere for 3 hours to prepare a positive electrode active material in the form of a single particle.

**Comparative Example 3**

The lithium transition metal oxide in the form of a single particle prepared in Preparation Example 1 was dry-mixed with 1000 ppm of $ZrO_2$ based on the total weight of the lithium transition metal oxide to prepare a mixture. The mixture was first heat-treated at a temperature of 700°C under an oxygen atmosphere for 3 hours, and then secondarily heat-treated at a temperature of 500°C under an oxygen atmosphere for 3 hours to prepare a positive electrode active material in the form of a single particle.

**Experimental Example**

**Experimental Example 1: Analysis of Positive Electrode Active Material**

**- Analysis of the Form of Positive electrode Active Material**

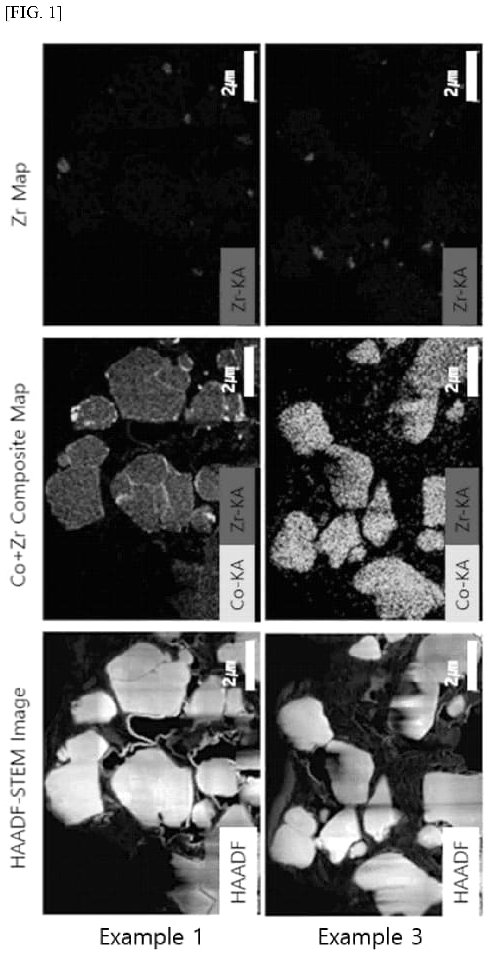

STEM-HAADF (FEI Titan G2 80-200 ChemiSTEM w/ Continumm S) was used (acceleration voltage: 20 kV) to obtain STEM-HR images of the positive electrode active materials of Example 1 and Comparative Example 3, which were shown in FIG. 1 (STEM-HR images of the positive electrode active materials of Example 1 and Comparative Example 3). Meanwhile, cross-sectional samples of the positive electrode active materials were prepared by performing Ar ion milling for 2 hours using FIB (Thermo Fisher Scientific C4 UX FIB) (acceleration voltage: 30 kV).

**- Analysis of elements included in the positive electrode active material**

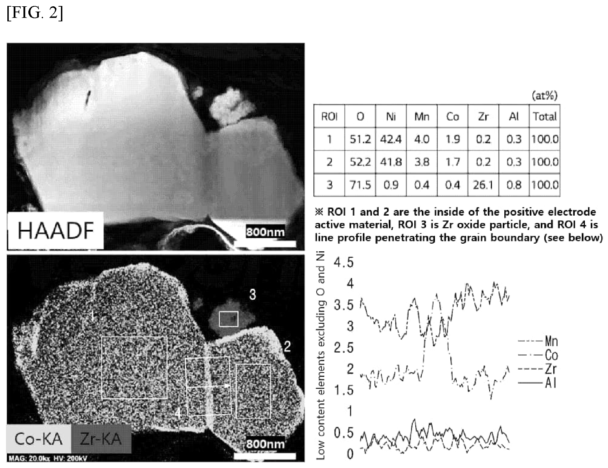

STEM-EDS (FEI Titan G2 80-200 ChemiSTEM w/Super-XEDS system) and STEM-HAADF (FEI Titan G2 80-200 ChemiSTEM w/DCOR+Cs-corrector) were used (acceleration voltage: 200 kV) to obtain element mapping data of Ni, Mn, Co, Zr, and Al of the first coating portion and the second coating portion from the positive electrode active material cross-section sample of Example 1. Meanwhile, cross-sectional samples of the positive electrode active materials were prepared by performing Ar ion milling for 2 hours using FIB (Thermo Fisher Scientific C4 UX FIB) (acceleration voltage: 30 kV). The results obtained from the mapping data were shown in Table 1 below. For reference, the analysis was conducted by specifying only the Ni, Mn, Co, Zr, and Al elements present in the coating portion, and the total weight % of the Ni, Mn, Co, Zr, and Al elements was 100 wt%. An example of a TEM-EDS mapping image of the positive electrode active material of Example 1 was shown in FIG. 2.

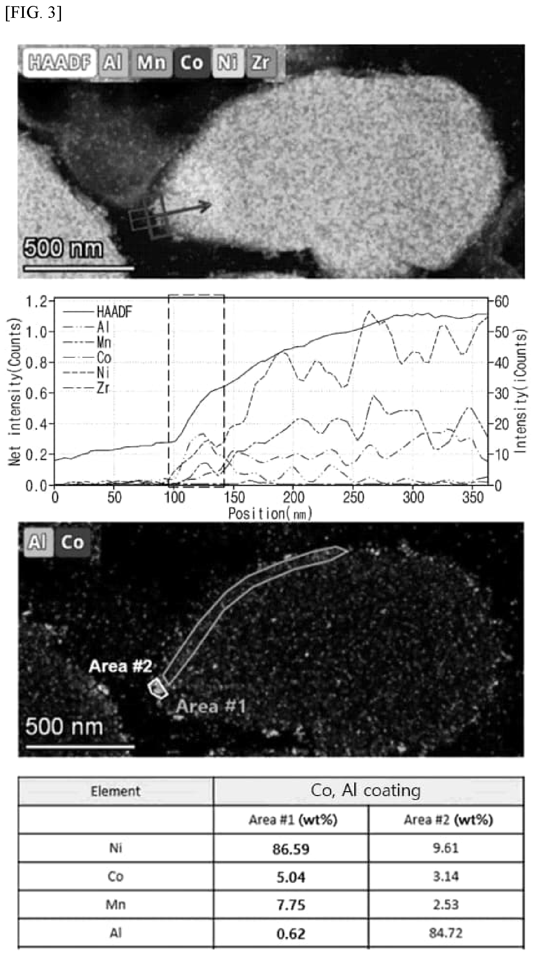

STEM-EDS(Thermo Fisher Scientific Spectra Ultra) and STEM-HAADF(Thermo Fisher Scientific Spectra Ultra) were used (acceleration voltage: 200 kV) to obtain element mapping data of Ni, Mn, Co, and Al of the first coating portion and the second coating portion from the positive electrode active material cross-section sample of Example 2. Meanwhile, cross-sectional samples of the positive electrode active materials were prepared by performing Ar ion milling for 2 hours using FIB (Thermo Fisher Scientific Scientific Helios FIB) (acceleration voltage: 30 kV). The results obtained from the mapping data were shown in Table 1 below. For reference, the analysis was conducted by specifying only the Ni, Mn, Co, and Al elements present in the coating portion, and the total weight % of the Ni, Mn, Co, and Al elements was 100 wt%. In addition, an example of a TEM-EDS mapping image of the positive electrode active material of Example 2 was shown in FIG. 3.

[Table 1]

| Division | | Ni (% by weight) | Mn (% by weight) | Co (% by weight) | Zr (% by weight) | Al (% by weight) | Total (% by weight) |
|---|---|---|---|---|---|---|---|
| Example 1 | First coating portion | 87.5 | 7.9 | 3.8 | 0.2 | 0.6 | 100.0 |
| | Second coating portion | 3.1 | 1.5 | 1.5 | 91.3 | 2.6 | 100.0 |
| Example 2 | First coating portion | 86.59 | 7.75 | 5.04 | - | 0.62 | 100.0 |
| | Second coating portion | 9.61 | 2.53 | 3.14 | - | 84.72 | 100.0 |

From Table 1 above and FIGS. 1 to 3, it can be confirmed that the positive electrode active materials of Examples 1 and 2 have a first coating portion in the form of a film and a second coating portion in the form of an island, and that the first coating portion is formed on the surface of the lithium transition metal oxide and the grain boundary.

In addition, it can be confirmed that in the positive electrode active material of Example 1, the content of Co included in the first coating portion is higher than the content of Co included in the second coating portion, and that the content of Zr included in the second coating portion is higher than the content of Zr included in the first coating portion. Specifically, it can be confirmed that in the positive electrode active material of Example 1, Co is evenly distributed throughout the positive electrode active material, and is more distributed (mainly distributed) in the first coating portion including the surface of the lithium transition metal oxide and grain boundary. In particular, it can be confirmed that the Co coating effect is prominent at the grain boundary. On the other hand, it can be confirmed that Zr is mainly distributed in the second coating portion in the form of an island.

In addition, it can be confirmed that in the positive electrode active material of Example 2, the content of Co included in the first coating portion is higher than the content of Co included in the second coating portion, and that the content of Al included in the second coating portion is higher than the content of Al included in the first coating portion. Specifically, it can be confirmed that in the positive electrode active material of Example 1, Co is evenly distributed throughout the positive electrode active material, and is more distributed (mainly distributed) in the first coating portion including the surface of the lithium transition metal oxide and grain boundary. In particular, it can be confirmed that the Co coating effect is prominent at the grain boundary. On the other hand, it can be confirmed that Al is mainly distributed in the second coating portion in the form of an island.

On the other hand, it can be confirmed that in the case of the positive electrode active material of Comparative Example 3, the first coating portion does not exist.

In addition, the molar ratio of Co and M element (Zr in Example 1, Al in Example 2) included in the first coating portion of the positive electrode active materials of Examples 1 and 2 ($Co_1:M_1$), the molar ratio of Co and M element included in the second coating portion ($Co_2:M_2$), and the molar ratio of M element included in the first coating portion and M element included in the second coating portion ($M_1:M_2$) were calculated from Table 1, and shown in Table 2 below.

[Table 2]

| Division | $Co_1:M_1$ | $Co_2:M_2$ | $M_1:M_2$ |
|---|---|---|---|
| Example 1 | 1:0.0526 | 0.0164:1 | 0.0022:1 |
| Example 2 | 1:0.1226 | 0.0371:1 | 0.0076:1 |

- **Analysis of the crystal of the positive electrode active material particle**

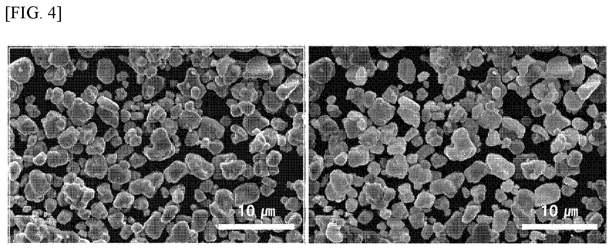

A scanning electron microscope (SEM, JEOL JSM-7900F) was used to take an SEM image of the positive electrode active material prepared in Example 1. Then, the particles existing in the SEM image were analyzed to be expressed in different colors for each single crystal grain using the DX program (LG Chemical). FIG. 4 is a SEM image of the positive electrode active material of Example 1 (left) and an image in which particles present on the SEM image are expressed in different colors for each single crystal grain (right). Referring to FIG. 4, it can be confirmed that the positive electrode active material in the form of a single particle according to the present invention is a form in which 10 or fewer particles composed of 1 single crystal grain are agglomerated.

**Experimental Example 2: Evaluation of Battery Characteristics**

**(Manufacture of Monocell)**

Each of the positive electrode active materials prepared in Examples 1 and 2 and Comparative Examples 1 to 3, carbon black (Denka, DenkaBlack) as a conductive material, and PVdF (Kureha, KF1300) as a binder were added to N-methylpyrrolidone (NMP) (Daejung Chemicals & Metals) as a solvent at a weight ratio of 92.5:3.5:4.0 to prepare a composition for forming a positive electrode active material layer.

The composition for forming a positive electrode active material layer was applied to one surface of an aluminum foil current collector having a thickness of 20 $\mu$m, and dried at a temperature of 135°C for 3 hours to form a positive electrode active material layer. Subsequently, rolling was performed using a roll pressing method so that the porosity of the positive electrode active material layer became 24% by volume after rolling, thereby manufacturing a positive electrode.

A negative electrode was manufactured by adding graphite, carbon black (Denka, DenkaBlack) as a conductive agent and SBR, CMC (Daicel) as a binder at a weight ratio of 95.8:1.0:2.2:1.0 to N-methylpyrrolidone (NMP) (Daejung Chemicals & Metals) as a solvent, and used as a counter electrode. Here, the negative electrode was in the form of being applied to one surface of a copper foil current collector with a thickness of 20 $\mu$m, and was rolled to have a porosity of 28% by volume.

A full-cell type monocell was manufactured with the positive and negative electrodes, targeting an N/P (negative/positive electrode) ratio of 1.2.

**(Evaluation of initial characteristics of the battery)**

The manufactured monocells were each charged with a constant current (CC) of 0.2C at 25°C until 4.25V, charged with a constant voltage (CV) of 4.25V until the charge current became 0.05 mAh (cut-off current), left for 10 minutes, and then discharged with a constant current of 0.2C until 2.5V, and the initial charge capacity and initial discharge capacity were measured and shown in Table 3 below. In addition, the percentage of the initial discharge capacity to the initial charge capacity was shown as the initial efficiency in Table 3 below.

**(Evaluation of cycle characteristics of the battery)**

The manufactured monocells were each charged at a constant current (CC) of 0.2C at 25°C until 4.25V, charged at a constant voltage (CV) of 4.25V until the charge current became 0.05 mAh (cut-off current), left for 10 minutes, and then discharged at a constant current of 0.2C until 2.5V.

Thereafter, the cells were transferred to a chamber at 45°C, charged at a constant current of 1C until 4.25V, charged at a constant voltage (CV) of 4.25V until the charge current became 0.05 mAh (cut-off current), and then discharged at a constant current of 2C until 2.5V, which was taken as one cycle, and 800 cycles of charge and discharge were performed. In this case, the percentage of the discharge capacity of the 800th cycle to the discharge capacity of the first cycle was shown as the capacity retention rate in Table 3 below. In addition, the percentage of the DCIR value of the 800th cycle to the DCIR value of the first cycle was shown as the resistance increase rate in Table 3 below. For reference, the DCIR value of the nth cycle is a value calculated by dividing a difference between the voltage at full charge and the voltage 10 seconds after the start of discharge by the current, which are obtained while discharging to 2.5 V at a constant current of 0.33C in the nth cycle.

The gas generation evaluation was conducted for 20 weeks, and only the positive electrode was separated from the monocell in the fully charged state, and the same electrolyte as the monocell evaluation electrolyte was newly injected to prepare a new monocell for gas evaluation. The manufactured monocell was sealed after maintaining a vacuum state for 10 seconds twice before complete sealing of the monocell to activate the electrode and electrolyte, and the gas generation evaluation on the first day was performed immediately after cell manufacture without a separate left period. Here, the gas generation evaluation was conducted by measuring the difference between the mass in the atmosphere and the mass in the liquid (excluding buoyancy) using Archimedes' principle and converting the volume of the cell, and the cell was stored for 20 weeks in an oven at 120°C to remove the moisture weight of the cell after the measurement. The results of the gas generation evaluation are shown as a volume change rate in Table 3 below, and the volume change rate means the percentage of the volume after 20 weeks to the volume of the cell on the first day.

[Table 3]

| Division | Initial charge capacity (mAh/g) | Initial discharge capacity (mAh/g) | Capacity retention rate (%) | Resistance increase rate (%) | Volume change rate (%) |
|---|---|---|---|---|---|
| Example 1 | 241.2 | 216.13 | 76.6 | 152.0 | 19.8 |
| Example 2 | 240.64 | 216.06 | 76.8 | 178.4 | 21.2 |

(continued)

| Division | Initial charge capacity (mAh/g) | Initial discharge capacity (mAh/g) | Capacity retention rate (%) | Resistance increase rate (%) | Volume change rate (%) |
|---|---|---|---|---|---|
| Comparative Example 1 | 240.35 | 212.18 | 72.2 | 272.6 | 24.7 |
| Comparative Example 2 | 239.78 | 215.13 | 75.4 | 236.6 | 24.0 |
| Comparative Example 3 | 239.73 | 212.18 | 70.0 | 258.8 | 24.9 |

Referring to the above experimental examples, it can be seen that the positive electrode active material of the examples has a first coating portion in the form of a film and a second coating portion in the form of an island formed on a lithium transition metal oxide in the form of an particle, and that the first coating portion and the second coating portion include a lithium cobalt oxide and an oxide including M element. In addition, it can also be seen that the content of Co included in the first coating portion is higher than the content of Co included in the second coating portion, and the content of the M element included in the second coating portion is higher than the content of the M element included in the first coating portion.

In addition, referring to Table 3, it can be seen that the positive electrode active material according to the present invention can secure the discharge capacity of a lithium secondary battery by controlling the NiO reduction layer, and can improve all of the lifespan, resistance, and gas performance.

**Claims**

1.   A positive electrode active material in the form of a single particle, including:

a lithium transition metal oxide in the form of a single particle; and
a first coating portion in the form of a film and a second coating portion in the form of an island, which are formed on the lithium transition metal oxide in the form of a single particle,
wherein the first coating portion and the second coating portion each independently include a cobalt compound including Co, and an oxide including an M element (wherein M is at least one selected from Zr, Al, B, Ti, Mg, Cr, Cu, V, and W),
wherein the content of Co included in the first coating portion is higher than the content of Co included in the second coating portion, and
the content of M element included in the second coating portion is higher than the content of M element included in the first coating portion.

2.   The positive electrode active material in the form of a single particle according to claim 1, wherein the molar ratio $(Co_1:M_1)$ of Co and M element included in the first coating portion is 1:0.01 to 0.99.

3.   The positive electrode active material in the form of a single particle according to claim 1, wherein the molar ratio $(Co_2:M_2)$ of Co and M element included in the second coating portion is 0.01 to 0.99:1.

4.   The positive electrode active material in the form of a single particle according to claim 1, wherein the molar ratio $(M_1:M_2)$ of M element included in the first coating portion and M element included in the second coating portion is 0.001 to 0.99:1.

5.   The positive electrode active material in the form of a single particle according to claim 1, wherein the Ni content included in the second coating portion is 30 wt% or less based on the total weight of the second coating portion.

6.   The positive electrode active material in the form of a single particle according to claim 1, wherein the positive electrode active material in the form of a single particle has an average particle diameter $(D_{50})$ of 0.1 $\mu$m to 10 $\mu$m.

7.   The positive electrode active material in the form of a single particle according to claim 1, wherein the positive electrode active material in the form of a single particle is a form in which 50 or less primary particles composed of 10 or less single crystal grains are agglomerated.

8.   The positive electrode active material in the form of a single particle according to claim 1, wherein the lithium transition metal oxide in the form of a single particle is a lithium composite transition metal oxide containing nickel (Ni), cobalt (Co), and manganese (Mn).

9. The positive electrode active material in the form of a single particle according to claim 1, wherein the lithium transition metal oxide in the form of a single particle has a composition represented by Chemical Formula 1 below:

[Chemical Formula 1] $Li_aNi_bCo_cMn_dM^1_eO_2$

wherein:

M$^1$ is at least one selected from Al, Zr, B, W, Mo, Cr, Nb, Mg, Hf, Ta, La, Ti, Sr, Ba, Ce, Sn, Y, Zn, F, P, and S, and

$$0.9 \leq a \leq 1.1,$$

$0.8 \leq b < 1.0$, $0 < c < 0.2$, $0 < d < 0.2$, $0 \leq e \leq 0.1$, and $b+c+d+e=1$.

10. A method for manufacturing a positive electrode active material according to claim 1, the method including the steps of:

(A) preparing a mixture by mixing a lithium transition metal oxide in the form of a single particle, a Co-containing raw material, and an M element-containing raw material (wherein, M is at least one selected from Zr, Al, B, Ti, Mg, Cr, Cu, V, and W); and
(B) first heat-treating the mixture at a temperature of more than 600°C and 800°C or lower, and then second heat-treating the mixture at a temperature of 400°C to 600°C.

11. The method for manufacturing a positive electrode active material according to claim 10, wherein the Co-containing raw material is at least one selected from the group consisting of $Co(OH)_2$, $Co_2O_3$, $CoCl_2$, $Co(NO_3)_2$, $Co(CH_3CO_2)_2$, and hydrates thereof.

12. The method for manufacturing a positive electrode active material according to claim 10, wherein in the step (A), the lithium transition metal oxide in the form of a single particle and the Co-containing raw material are mixed at a molar ratio of 1:0.01 to 0.05.

13. The method for manufacturing a positive electrode active material according to claim 10, wherein in the step (A), the M element-containing raw material is mixed in an amount of 500 ppm to 5000 ppm based on the total weight of the lithium transition metal oxide in the form of a single particle.

14. The method for manufacturing a positive electrode active material according to claim 10, wherein the mixing in the step (A) is dry mixing.

15. The method for manufacturing a positive electrode active material according to claim 10, wherein the first heat treatment in the step (B) is performed under an oxygen atmosphere.

16. The method for manufacturing a positive electrode active material according to claim 10, wherein the second heat treatment in the step (B) is performed under an oxygen atmosphere.

[FIG. 1]

Zr Map   Co+Zr Composite Map   HAADF-STEM Image

Example 1          Example 3

[FIG. 2]

| ROI | O | Ni | Mn | Co | Zr | Al | Total |
|-----|------|------|-----|-----|------|-----|-------|
| 1 | 51.2 | 42.4 | 4.0 | 1.9 | 0.2 | 0.3 | 100.0 |
| 2 | 52.2 | 41.8 | 3.8 | 1.7 | 0.2 | 0.3 | 100.0 |
| 3 | 71.5 | 0.9 | 0.4 | 0.4 | 26.1 | 0.8 | 100.0 |

(at%)

※ ROI 1 and 2 are the inside of the positive electrode active material, ROI 3 is Zr oxide particle, and ROI 4 is line profile penetrating the grain boundary (see below)

[FIG. 3]

| Element | Co, Al coating | |
|---|---|---|
| | Area #1 (wt%) | Area #2 (wt%) |
| Ni | 86.59 | 9.61 |
| Co | 5.04 | 3.14 |
| Mn | 7.75 | 2.53 |
| Al | 0.62 | 84.72 |

[FIG. 4]

# EP 4 773 225 A1

## INTERNATIONAL SEARCH REPORT

International application No.

**PCT/KR2024/015445**

### A. CLASSIFICATION OF SUBJECT MATTER

**H01M 4/36**(2006.01)i; **H01M 4/525**(2010.01)i; **H01M 4/505**(2010.01)i; **H01M 10/052**(2010.01)i; **C01G 53/00**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01G 53/04(2006.01); H01M 10/052(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 단입자 (single particle), 아일랜드 형태 코팅 (island type coating), 농도구배 (concentration gradient), 제2 소성 (secondary sintering), 막 형태 코팅 (film type coating)

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0059241 A (LG CHEM, LTD.) 30 May 2019 (2019-05-30) See abstract; paragraphs [0094]-[0098] and [0100]-[0104]; and claims 2 and 11. | 1-16 |
| A | KR 10-2410700 B1 (L & F CO., LTD.) 22 June 2022 (2022-06-22) See abstract; and paragraphs [0099]-[0104] and [0108]-[0111]. | 1-16 |
| A | KR 10-2523095 B1 (SM LAB CO., LTD. et al.) 18 April 2023 (2023-04-18) See abstract; and claims 1-20. | 1-16 |
| A | KR 10-2023-0047637 A (LG ENERGY SOLUTION, LTD.) 10 April 2023 (2023-04-10) See abstract; and claims 1-15. | 1-16 |
| A | JP 2022-042107 A (HITACHI METALS LTD.) 14 March 2022 (2022-03-14) See abstract; and claims 1-8. | 1-16 |

☐ Further documents are listed in the continuation of Box C.      ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **13 January 2025** | **14 January 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/015445**

| Patent document cited in search report | | | Publication date (day/month/year) | Patent family member(s) | | | Publication date (day/month/year) |
|---|---|---|---|---|---|---|---|
| KR | 10-2019-0059241 | A | 30 May 2019 | CN | 111164806 | A | 15 May 2020 |
| | | | | CN | 111164806 | B | 21 April 2023 |
| | | | | CN | 116154148 | A | 23 May 2023 |
| | | | | DE | 202018006840 | U1 | 19 September 2023 |
| | | | | DE | 202018006941 | U1 | 27 September 2024 |
| | | | | EP | 3680968 | A1 | 15 July 2020 |
| | | | | EP | 4250404 | A2 | 27 September 2023 |
| | | | | EP | 4250404 | A3 | 06 December 2023 |
| | | | | JP | 2020-520539 | A | 09 July 2020 |
| | | | | JP | 6929588 | B2 | 01 September 2021 |
| | | | | KR | 10-2023-0153983 | A | 07 November 2023 |
| | | | | KR | 10-2687546 | B1 | 24 July 2024 |
| | | | | US | 11594727 | B2 | 28 February 2023 |
| | | | | US | 11909045 | B2 | 20 February 2024 |
| | | | | US | 11967714 | B2 | 23 April 2024 |
| | | | | US | 2020-0295367 | A1 | 17 September 2020 |
| | | | | US | 2023-0163295 | A1 | 25 May 2023 |
| | | | | US | 2023-0352678 | A1 | 02 November 2023 |
| | | | | US | 2024-0234719 | A1 | 11 July 2024 |
| | | | | WO | 2019-103458 | A1 | 31 May 2019 |
| KR | 10-2410700 | B1 | 22 June 2022 | EP | 4404298 | A1 | 24 July 2024 |
| | | | | WO | 2023-043209 | A1 | 23 March 2023 |
| KR | 10-2523095 | B1 | 18 April 2023 | WO | 2024-096295 | A1 | 10 May 2024 |
| KR | 10-2023-0047637 | A | 10 April 2023 | CA | 3219605 | A1 | 06 April 2023 |
| | | | | CN | 117321795 | A | 29 December 2023 |
| | | | | EP | 4325600 | A1 | 21 February 2024 |
| | | | | JP | 2024-520032 | A | 21 May 2024 |
| | | | | KR | 10-2669346 | B1 | 28 May 2024 |
| | | | | US | 2024-0282928 | A1 | 22 August 2024 |
| | | | | WO | 2023-054959 | A1 | 06 April 2023 |
| JP | 2022-042107 | A | 14 March 2022 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020230136137